# EUROPÄISCHE PATENTSCHRIFT

(11) **EP 2 111 070 B1**
(45) Veröffentlichungstag und Bekanntmachung des Hinweises auf die Patenterteilung: **07.11.2012**
(21) Anmeldenummer: 09010240.1
(22) Anmeldetag: 23.02.2005
(51) Int. Cl.: H04W 24/00

(54) **VERFAHREN ZUR FEHLERERKENNUNG BEI REKONFIGURIERBAREN ENDGERÄTEN UND ZUR UNTERSTÜTZUNG VON REKONFIGURATIONSENTSCHEIDUNGEN SOWIE EIN ENTSPRECHENDES NETZWERKELEMENT UND EIN ENTSPRECHENDER AGENT**
METHOD FOR DETECTING ERRORS RELATED TO RECONFIGURABLE TERMINALS AND SUPPORTING RECONFIGURATION DECISIONS AS WELL AS A CORRESPONDING NETWORK ELEMENT AND A CORRESPONDING AGENT
PROCÉDÉ DE DÉTECTEUR D'ERREUR DES TERMINAUX RECONFIGURABLES ET D'ASSISTANCE DE DÉCISION DE RECONFIGURATION, ÉLÉMENT RÉSEAU CORRESPONDANT ET AGENT CORRESPONDANT

(30) Priorität: 02.04.2004 DE 102004016381
(43) Veröffentlichungstag der Anmeldung: 21.10.2009
(62) Teilanmeldung aus: 05708047.5
(73) Patentinhaber: SIEMENS AKTIENGESELLSCHAFT, 80333 München (DE)
(72) Erfinder: Dillinger, Michael, 82041 Oberhaching (DE); Niedermeier, Christoph, Dr., 80999 München (DE); Schmid, Reiner, Dr., 80538 München (DE)

(56) Entgegenhaltungen:
- EP-A- 1 239 688
- EP-A- 1 263 249
- WO-A-02/51030
- WO-A-96/24230

## Beschreibung

Die Erfindung betrifft Verfahren, Netzwerkelemente und Komponenten für Mobilfunknetzwerke mit rekonfigurierbaren Endgeräten, bei denen die Nutzung einer neuen bisher nicht unterstützten Radiotechnologie durch Austausch einer Software erfolgt, die den Transceiver des Endgeräts konfiguriert.

Die Entwicklung und der Einsatz einer neuen Technologie in mobilen Telekommunikationsnetzwerken erfordert einen hohen Aufwand, um ein reibungsloses Zusammenspiel der einzelnen Komponenten zu erreichen. Das wird herkömmlicherweise durch aufwendige Standardisierung, siehe z.B. GSM oder UMTS, und Tests der einzelnen Komponenten erzielt. Dies gilt insbesondere für die Zusammenarbeit der Netzwerkelemente mit den Endgeräten. Bei gegenwärtigen Endgeräten ist jedoch die Nutzung von Radiotechnologien durch ein Endgerät auf eine genau definierte Auswahl beschränkt, da die Nutzung einer Radiotechnologie den Einsatz einer jeweils speziellen Hardware für die jeweilige Radiotechnologie erfordert. Bei rekonfigurierbaren Endgeräten bzw. bei Software Defined Radio Geräten, kann aufgrund eines softwareprogrammierbaren Transceivers dagegen die Nutzung einer neuen bisher nicht unterstützten Radiotechnologie durch Austausch der Software erfolgen, die den Transceiver konfiguriert. Neue Funktechniken und Standards können daher durch einen einfachen Softwaredownload auf das Terminal genutzt werden, d.h. auch bereits vorhandene Terminals können im Nachhinein neue Technologien im Radiobereich nutzen.

Der jetzige UMTS Standard stellt beispielsweise hohe Anforderungen an die Terminals, was u.a. dazu führt, dass einige Hersteller bereits einen "UMTS Lightweight" Standard in Betracht ziehen, welcher eine niedrigere Komplexität aufweist, jedoch in bestimmten Situationen dieselbe Performance liefert wie der originäre Standard. Dies setzt aber u.a. voraus, dass nicht nur das Endgerät, sondern auch die involvierte Basisstation bzw. Base Station den modifizierten Standard interpretieren kann.

Durch diese neue Technologie für Endgeräte ist allerdings nicht mehr garantiert, dass das Zusammenspiel der Endgeräte, wie z.B. Handys, mit einer Basisstation sowie den anderen Komponenten im Netzwerk vollständig getestet werden kann. Die Rekonfigurationsfähigkeit der Endgeräte kann dazu führen, dass selbst bei größter Sorgfalt Störungen aufgrund eines Softwaredownloads entstehen. Ursache dafür können Fehler in der aufgebrachten Software selber sein, die darauf zurückzuführen sind, dass das Zusammenspiel mit den Netzwerkkomponenten für diese Geräte nicht ausreichend getestet werden konnte.

In der europäischen Patentanmeldung EP-A-1 263 249 ist ein Verfahren und eine Station zum Fehlermanagement für Software-gestützte Funkstationen mittels Analyse von Funkprotokollen beschrieben, bei dem zumindest ein Teil der Software einer Station über eine Schnittstelle aktualisiert wird und eine Fehlerüberwachung der Station hinsichtlich der Aktualisierung durchgeführt wird. Zur Verbesserung der Fehlerüberwachung wird hier vorgeschlagen, fehlererkennungsrelevante Daten der Station für eine zeitversetzte Auswertung in der Station oder einer Netzeinrichtung zu protokollieren. Vorteilhafterweise können Sendeleistungswerte protokolliert werden, um diese zu einem späteren Zeitpunkt nach einer Übertragung zu einer Analyseeinrichtung im Kommunikationsnetz mit entsprechenden Netzprotokollanweisungen zu vergleichen, die maximale oder zu ändernde Sendeleistungswerte für die Station vorgeben.

Aus der Patenanmeldung EP 1239688 A1 ist ein mobiles Endgerät mit Mitteln zum Detektieren und Berichten von Fehlern bekannt. Das Auftreten von Fehlern wird hierbei automatisch während des Betriebs festgestellt und einem Entwickler des Endgeräts mitgeteilt, ohne dass der Endgerätenutzer davon Kenntnis erhält beziehungsweise durch eventuelle Fehlermeldung gestört wird.

Die der Erfindung zu Grunde liegende Aufgabe besteht nun darin, ein Verfahren zur Fehlererkennung und zur Unterstützung von Rekonfigurations-Entscheidungen in Mobilfunknetzwerken mit rekonfigurierbaren Endgeräten anzugeben, bei dem eine höhere Zuverlässigkeit der Interoperabilität von Terminals und Netzwerkelementen in Mobilfunknetzwerken, die rekonfigurierbare Terminals unterstützen, erreicht wird.

Diese Aufgabe wird durch die Merkmale des Patentanspruchs 1 gelöst. Die weiteren Ansprüche betreffen bevorzugte Ausgestaltungen des erfindungsgemäßen Verfahrens sowie ein Netzwerkelement und einen Agenten zur Durchführung des erfindungsgemäßen Verfahrens.

Die Erfindung betrifft im Wesentlichen eine jeweilige Agentenplattform in Netzwerkelementen sowie herstellerspezifische Agenten, die entweder direkt oder über Agenten-Proxies von Agenten-Providern auf diesen Plattformen installiert werden, wobei die Agenten dann über eine definierte Schnittstelle der Agentenplattform Rohinformationen über aufgetretene Betriebsfehler erhalten und zusammen mit herstellerspezifischen Informationen zu den jeweiligen Endgeräten bzw. Endgerätetypen, die nur dem jeweiligen Hersteller bekannt sind, entsprechende verdichtete Entscheidungsinformationen zur Beurteilung von Fehlerfällen und/oder zur Optimierung von Rekonfigurations-Entscheidungen bilden und diese über die definierte Schnittstelle dem Netzwerkelement bzw. dem Netzwerkbetreiber und/oder dem Agenten-Provider bzw. dem Endgerätehersteller zur Verfügung stellen. Dies führt zu einer höheren Zuverlässigkeit der Interoperabilität von Terminals und Netzwerkelementen in Mobilfunknetzwerken mit rekonfigurierbaren Terminals.

Die Erfindung wird nachfolgend anhand von in der Zeichnung dargestellten Ausführungsbeispielen näher erläutert.

Dabei zeigt
- Figur 1: eine Darstellung zur Erläuterung eines ersten Aus- führungsbeispiels der Erfindung und
- Figur 2: eine Darstellung zur Erläuterung eines zweiten Aus- führungsbeispiels der Erfindung.

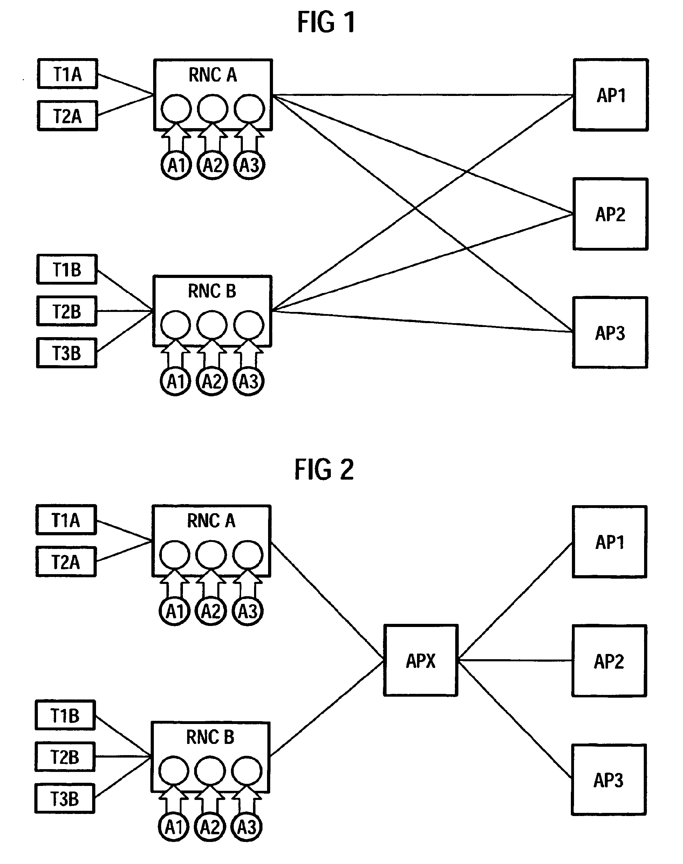

In **Figur 1** ist eine Darstellung mit agenten-fähigen Netzwerkelementen in einem Radio Access Netzwerk gezeigt, wobei ein Netzwerkelement in Form eines Radio Network Controllers bzw. RNCs **RNCA** mit zwei Terminals **T1A** und **T2A** und ein weiteres Netzwerkelement in Form eines Radio Network Controllers **RNCB** mit drei Terminals **T1B, T2B** und **T3B** verbunden bzw. verbindbar sind und jeweils von Agenten-Providern **AP1, AP2** und **AP3** direkt bzw. unmittelbar mit Agenten **A1, A2** und **A3** versorgt werden. In diesem Fall sind die agenten-fähigen Knoten also die RNCs eines UMTS. In anderen Technologien können diese in Netzwerkelementen mit analoger Funktion eingesetzt werden. In Wireless LAN (WLAN) Netzwerken stellt beispielsweise eine Verwendung in den WLAN Access Points eine solche analoge Verwendung dar.

Die Agenten tauschen direkt mit dem jeweiligen Agenten-Provider, d.h. in der Regel der Hersteller selbst oder ein Service-Provider, Daten aus. Dies erfordert jedoch, dass dem Agenten-Provider alle Einsatzorte der Agenten unmittelbar bekannt sind. Der Agenten-Provider muss daher wissen, auf welchen RNCs seine Agenten installiert sind.

Die Agenten **A1, A2** und **A3** erhalten über definierte Schnittstellen einer Agentenplattform des Netzwerkelements Rohinformationen, die für die Beurteilung von Fehlerfällen sowie die optimierte Entscheidungsfindung hinsichtlich Rekonfiguration von Terminals notwendig sind. Diese werden innerhalb der Komponente bearbeitet bzw. zu Entscheidungsinformationen verdichtet.

In **Figur 2** ist ebenfalls eine Darstellung mit agenten-fähigen Netzwerkelementen in einem Radio Access Netzwerk gezeigt, die sich von der in Figur 1 gezeigten Darstellung nur dadurch unterscheiden, dass die RNCs **RNCA** und **RNCB** nicht direkt, sondern über einen Agenten-Proxy **APX** von den Agenten-Providern **AP1, AP2** und **AP3** mit Agenten **A1, A2** und **A3** versorgt werden. Ein Agenten-Proxy **APX** vermittelt die Kommunikation zwischen den RNCs, auf denen Agenten installiert sind, mit ihren Providern, wobei der Agenten-Proxy eine zentrale Stelle darstellt, auf den die Netzwerkelemente zugreifen und der das Management übernimmt, welcher Agenten-Provider die gewünschten Informationen liefert. Die Provider **AP1, AP2** und **AP3** wiederum können Anfragen und Nachrichten für ihre Agenten **A1, A2** und **A3** direkt an den Agenten-Proxy **APX** schicken, der die Nachrichten an die betroffenen Agenten verteilt. Im Zuge der Installation bzw. Deinstallation werden die RNCs, auf denen Agenten bestimmter Hersteller installiert sind, auf dem Agenten-Proxy **APX** registriert, so dass über den Proxy **APX** die einzelnen Agenten **A1, A2** und **A3** auf den RNCs **RNCA** und **RNCB** angesprochen werden können.

Die Netzwerkelemente in Mobilfunknetzwerken, beispielsweise RNCs, werden mit Bereichen bzw. Agentenplattformen für solche Agenten ausgestattet, wobei die Plattformen z. B. die Rechenzeitzuteilung für die Agenten und deren Controlling übernehmen. Der Bereich, in dem die Agenten laufen, ist dabei so geschützt, dass ein Zugriff nur durch besonders berechtigte Benutzer, d.h. den Hersteller der jeweiligen Komponente, möglich ist. Die Agentenplattform ist dabei so ausgestaltet, dass der Agent selbst verschlüsselt übermittelt wird, die Software daher Dritten nicht zugänglich ist. Ferner muss sich die Plattform gegenüber dem Agenten autorisieren, damit gesichert ist, dass Dritte die Software nicht nutzen können. Weiterhin ist die Datenübertragung zwischen dem Agenten und dem jeweils nutzungsberechtigten Herstellern, also den Agenten-Providern, über ebensolche Maßnahmen gesichert, so dass die Daten, die ausgetauscht werden, vertraulich behandelt werden, und nur dem berechtigten Hersteller zugehen können.

Der Netzwerkbetreiber hat die Kontrolle darüber, wer Agenten auf seinen Netzwerkelementen einsetzen darf, hat aber keinen oder nur einen beschränkten Zugriff auf Daten des Agenten selbst.

Darüber hinaus gewährt das Netzwerkelement selbst nur dem jeweils berechtigten Agenten Zugriff auf die Daten. Damit können Agenten auf sichere Weise, beispielsweise vom Hersteller eines bestimmten Terminaltyps, erzeugt werden. Diese Agenten können dann, ohne dass Dritte auf die vertraulichen Informationen Zugriff nehmen können, auf den Netzwerkelementen eigenständig Aufgaben ausführen.

Die Anwendung der Erfindung ist jedoch nicht nur beschränkt auf RNCs, ein weiterer Einsatzbereich der Erfindung besteht darüber hinaus in ihrem Einsatz auf Base Transceiver Stations (BTS). Hier können durch den Einsatz von Agenten, zusätzlich zu den bis dahin genannten Anwendungsbeispielen, gezielt herstellerspezifische Erweiterungen des jeweiligen Mobilfunkstandards realisiert werden. Hierbei wird davon ausgegangen, dass zukünftig Hersteller von Mobilfunkendgeräten eigene herstellerspezifische Erweiterungen des Mobilfunkstandards verwenden werden, um ihre Geräte mit zusätzlichen Vorteilen auszustatten. Solche können z.B. sein: Reduktion der Datenrate durch Verwendung eines schmaleren Frequenzbandes, wodurch die vorhandene Kapazität der Mobilfunkzelle besser ausgenutzt werden kann, da sich mehr Terminals ein Band teilen können.

Diese nicht standardkonformen Endgeräte erfordern allerdings eine herstellerspezifische Erweiterung der Funktionalität der BTS, da diese den die Erweiterungen zum Standard unterstützen muss. Diese Funktionalität kann durch den Hersteller des Terminals durch die Bereitstellung entsprechender Agenten für die BTS verfügbar gemacht werden. Damit können solche Endgeräte mit einer beliebigen BTS, die mit einer Agentenplattform ausgestattet sind, genutzt werden, ohne das der Hersteller der BTS solche Standarderweiterungen bei der Konstruktion der BTS gezielt für bestimmte Hersteller berücksichtigen muss. Der Hersteller des Endgeräts muss zudem nicht alle Details seiner herstellerspezifischen Erweiterung offenlegen, da diese durch den jeweils zugehörigen Agenten auf der BTS verarbeitet werden können. Die Auslegung der Schnittstelle der Agentenplattform mit der BTS kann zudem sicherstellen, dass die herstellerspezifischen Standarderweiterungen nicht mit dem Verhalten anderer Mobilfunkteilnehmer in Konflikt geraten.

### Fehleranalyse and Fehlerdatenerhebung

Die Netzwerkelemente stellen dabei über definierte Schnittstellen einer Agentenplattform, dem Agenten eines Herstellers, Information über in Zusammenhang mit den Geräten des betreffenden Herstellers aufgetretene Fehler zur Verfügung. Dazu gehören unter anderem: Verletzungen der Netzwerkprotokolle, Verletzungen des Radio-Standards, z.B. falls das Terminal einen anderen Frequenzbereich als gefordert verwendet oder Zeitvorgaben verletzt, oder andere Vorkommnisse, die zu einer Störung des Netzwerkes führen.

Informationen über derartige Fehlfunktionen fallen jedoch zumeist im Bereich des Netzwerkbetreibers an, der diese jedoch nur unzureichend interpretieren kann, da er nicht über die vollständige, im allgemeinen nicht-öffentlich zugängliche Spezifikation des betroffenen Gerätes verfügt. Diese Information ist jedoch erforderlich, wenn ein reibungsfreier Betrieb des Netzwerkes gewährleistet werden soll. Insbesondere müssen Geräte, die eine wesentliche Beeinträchtigung des Netzwerkbetriebs verursachen, identifiziert und durch geeignete Maßnahmen daran gehindert werden, weiterhin den Betrieb des Netzwerks zu stören. Dies kann z.B. durch gezieltes Aufbringen von "bug-fixes" in der Terminalsoftware geschehen. Dazu ist jedoch eine Analyse der Betriebsdaten und Kommunikation mit den Netzwerkelementen notwendig. Die Übermittlung sämtlicher Daten an den Hersteller hätte jedoch einen unvertretbar hohen Kommunikationsbedarf zufolge und würde die Übermittlung sensitiver Daten über das Verhalten von Mobilfunknutzern einschließen. Zudem ist das notwendige Vorgehen abhängig von der Art des verwendeten Terminals und kann auf Informationen beruhen, die der Hersteller nicht preisgeben möchte.

Der Agent sammelt relevante Fehlerfälle und übermittelt Daten bzw. verdichtete Informationen darüber an den Hersteller. Zudem können die Fehler auch durch den Agenten analysiert und notwendige Entscheidungen getroffen werden. So z.B. die Rekonfiguration des Terminals auf einen "failsafe"-Default-Mode, die Einleitung eines Softwaredownload, um fehlerhafte Software durch neuere zu ersetzen, oder die Stilllegung des Terminals, wenn ein betriebsicherer Zustand nicht erreicht werden kann. Dies wird durch spezielle Kommandos erreicht, die der Agent dem Terminal schicken kann. Diese sind durch Autorisierungskodes so abgesichert, dass ein Missbrauch durch Dritte ausgeschlossen ist.

### Unterstützung bei der Rekonfigurations-Entscheidung

Solche Informationen werden zudem auch für Entscheidungen/Algorithmen benötigt, die eine möglichst optimale Entscheidung über den Wechsel zwischen Radiotechnologien treffen sollen. Diese müssen daher in einer Weise bereitgestellt werden, die es den Betreibern der Netzwerke erlaubt, eine möglichst optimale Ausnutzung ihrer Netzwerke zu erreichen, ohne die betreffende Information öffentlich, insbesondere aber Herstellern von Netzwerkelementen (und der darauf laufenden Software) bekannt machen zu müssen. Solche Informationen können unter anderem die Eigenschaften der Endgeräte wie den Energieverbrauch des Terminals in bestimmten Radio-Modes, die Zeitdauer der Rekonfiguration oder die genauen Charakteristika des Transceivers betreffen.

Das Netzwerkelement richtet eine Anfrage an den Agenten des jeweiligen Herstellers, die dieser anhand der nur ihm zugänglichen Daten sowie der Information, die im Rahmen der Anfrage vom Netzwerkelement geliefert wird, bearbeitet. Der Agent schickt als Antwort auf die Anfrage eine Empfehlung an das Netzwerkelement, die zur Optimierung der Abläufe im Netzwerk verwendet werden kann. Konfigurationsparameter rekonfigurierbarer Terminals sowie herstellerspezifische Rekonfigurationsmechanismen werden so innerhalb des Agenten gekapselt. Weder der Netzwerkoperator noch der Benutzer des mobilen Terminals noch andere Gerätehersteller haben Zugriff auf diese Daten. Entscheidungen über die optimale Rekonfiguration werden, wie bereits oben angedeutet, teilweise auf herstellerspezifische Agenten ausgelagert, die aufgrund der ihnen zur Verfügung gestellten Informationen und der herstellerspezifischen Daten, die nur ihnen bekannt sind, Entscheidungsvorschläge erstellen, die der RNC berücksichtigen kann.

### Vorteile

Mit Agentenfähigkeit ausgestattete Netzwerkelemente, wie z. B. RNCs, Access Points, und analoge Geräte, können rekonfigurierbare Terminals, wie z.B. Mobiltelephone, Private Digital Assistants (PDAs), oder Notebooks, deutlich besser unterstützen als herkömmlich beschaffene Netzwerkelemente.

Die in Folge der freien Programmierung des Protokollstacks der Endgeräte höhere Rate an möglichen Fehlern kann durch die Einbeziehung von herstellerspezifischen Algorithmen/Informationen besser kontrolliert werden. Insbesondere können auftretende Fehler besser erkannt und interpretiert werden, da vom Hersteller des Gerätes bereitgestellte Software diese Funktion übernehmen kann. Dies erlaubt die richtige Interpretation von Fehlfunktionen und die Einleitung geeigneter Maßnahmen, wie z.B. die Stilllegung bzw. die Einleitung der Rekonfiguration auf einwandfrei arbeitende "default"-Modi oder die Erkennung der Notwendigkeit eines "updates" der Software. Das System kann zudem zur Früherkennung von Fehlerquellen in der Software des Terminals dienen, indem es Informationen über die Häufigkeit von Fehler und deren Art sammelt und dem Hersteller zur Verfügung stellt.

Eine weitere Verbesserung der Zuverlässigkeit kann auch durch die Bereitstellung von herstellerspezifischen "Fallback"-Aktionen im Fehlerfall erreicht werden, die es auch ohne "update" der Software des Endgeräts erlauben, einen normalen Betrieb trotz vorhandener Fehler fortzusetzen, bis ein entsprechender Softwareupdate für das Endgerät bereitsteht.

Ein weiterer Vorteil der Erfindung liegt in der verbesserten Art und Weise, in der Entscheidungen über die Rekonfiguration der Endgeräte getroffen werden können. Die Agenten können Spezifika des Herstellers bei der Entscheidung berücksichtigen, ohne dass diese Details öffentlich bekannt gemacht werden müssen. Zudem erlaubt die verwendete Technik, diese herstellerspezifischen Software-Komponenten leicht auszutauschen und durch eine neue zu ersetzen, womit Änderungen an Endgeräten sowie der Einführung neuer Endgeräte Rechnung getragen werden kann.

Zudem erlaubt die Erfindung den schnelleren Einsatz von Erweiterungen von Mobilfunkstandards. Damit können neue herstellerspezifische Erweiterungen vorhandener Standards, die z.B. zu einer besseren Nutzung der Ressourcen in Mobilfunkzellen beitragen können, auf einfache Weise in Mobilfunknetzwerken, die mit BTSs gemäß der vorliegenden Erfindung ausgestattet sind, eingesetzt werden.

## Patentansprüche

1. Verfahren zur Fehlererkennung bei rekonfigurierbaren Endgeräten und zur Unterstützung von Rekonfigurations-Entscheidungen,
die von Netzwerkelementen (RNCA, RNCB) auf zumindest einen endgerätehersteller-spezifisch zugriffsgeschützten Agenten (A1, A2, A3) ausgelagert sind, und
bei dem der Agent aufgrund von ihm zur Verfügung gestellten Rohinformationen und herstellerspezifischen Daten bezüglich des jeweiligen Endgeräts, die nur einem Endgerätehersteller des jeweiligen Endgeräts zugänglich sind, Entscheidungsinformationen für eine Rekonfiguration eines Endgerätes erstellt und nur einem berechtigten Endgerätehersteller zur Verfügung stellt.

2. Verfahren nach Anspruch 1,
bei dem die Entscheidungsinformationen Informationen zur Stilllegung von Fehlfunktionen, zur Einleitung der Rekonfiguration auf einwandfrei arbeitende "default"-Modi oder zur Erkennung der Notwendigkeit eines "updates" einer Software enthalten.

3. Verfahren nach Anspruch 1,
bei dem die herstellerspezifischen Daten herstellerspezifische Erweiterungen eines betreffenden Mobilfunkstandards enthalten.

4. Verfahren nach Anspruch 1,
bei dem die herstellerspezifischen Daten den Energieverbrauch des jeweiligen Endgeräts in bestimmten Radio-Modes und/oder die Zeitdauer der Rekonfiguration und/oder die genauen Charakteristika eines Transceivers enthalten.

5. Verfahren nach einem der Ansprüche 1 bis 4,
bei dem Netzwerkelemente (RNCA, RNCB) mit einer AgentenPlattform durch Agenten-Provider (AP1, AP2 und AP3) direkt oder über mindestens einen Agenten-Proxy (APX) mit Agenten (A1, A2, A3) versorgt werden,
bei dem die Agenten (A1, A2, A3) über definierte Schnittstellen der Agentenplattform Rohinformationen geeignet zur Beurteilung von Fehlerfällen und/oder geeignet zur Optimierung von Rekonfigurations-Entscheidungen vom jeweiligen Netzwerkelement (RNCA, RNCB) erhalten und
bei dem diese Rohinformationen innerhalb des jeweiligen Agenten (A1, A2, A3) bearbeitet und daraus Entscheidungsinformationen geeignet zur Beurteilung von Fehlerfällen und/oder zur Optimierung von Rekonfigurations-Entscheidungen gebildet werden und diese einem Netzwerkelement (RNCA, RNCB) bzw. einem Netzwerkbetreiber und/oder dem Agenten-Provider (AP1, AP2 und AP3) bzw. einem Endgerätehersteller zur Verfügung gestellt werden.

6. Verfahren nach Anspruch 5,
bei dem die Netzwerkelemente (RNCA, RNCB) einem jeweiligen Agenten (A1, A2, A3) eines Endgeräteherstellers über die definierten Schnittstellen der Agentenplattform Rohinformationen über Betriebsfehler des jeweiligen Endgeräts übergeben und der Agent (A1, A2, A3) auf Anfrage des Agentenproviders (AP1, AP2 und AP3) auf Basis dieser Rohinformationen gebildete Entscheidungsinformationen an den Agenten-Provider (AP1, AP2 und AP3) liefert.

7. Netzwerkelement (RNCA, RNCB) zur Durchführung des Verfahrens nach einem der vorhergehenden Ansprüche,
- mit Mitteln zum Erhalt von Agenten (A1, A2, A3) und
- mit Mitteln zum Erhalt von Entscheidungsinformationen geeignet zur Beurteilung von Fehlerfällen und/oder geeignet zur Optimierung von Rekonfigurations-Entscheidungen.

8. Agent (A1, A2, A3) für Mobilfunknetzwerke zur Durchführung des Verfahrens nach einem der Ansprüche 1 bis 6,
- mit mindestens einem geschützten Speicherbereich,
- mit Mitteln zum Erhalt von Rohinformationen geeignet zur Beurteilung von Fehlerfällen und/oder geeignet zur Optimierung von Rekonfigurations-Entscheidungen und
- mit Mitteln zur Bildung von Entscheidungsinformationen geeignet zur Beurteilung von Fehlerfällen und/oder geeignet zur Optimierung von Rekonfigurations-Entscheidungen aus diesen Rohinformationen.

## Claims

1. Method for detecting faults in the case of reconfigurable terminals and for supporting reconfiguration decisions,
which are stored by network elements (RNCA, RNCB) on at least one terminal manufacturer-specific access-protected agent (A1, A2, A3) and
in which on account of the raw information and manufacturer-specific data available thereto with respect to the respective terminal, which is only accessible to a terminal manufacturer of the respective terminal, the agent provides decision information for a reconfiguration of a terminal and only provides the same to an authorised terminal manufacturer.

2. Method according to claim 1,
wherein the decision information contains information about closing off faults, about introducing the reconfiguration on efficiently operating "default" modes or about recognising the need for an "update" of a software.

3. Method according to claim 1,
wherein the manufacturer-specific data contains manufacturer-specific extensions of a relevant mobile radio standard.

4. Method according to claim 1,
in which the manufacturer-specific data contains the energy consumption of the respective terminal in specific radio modes and/or the reconfiguration period and/or the precise characteristics of a transceiver.

5. Method according to one of claims 1 to 4,
in which network elements (RNCA, RNCB) with an agent platform are supplied with agents directly by agent providers (AP1, AP2 and AP3) or by way of at least one agent proxy (APX),
in which the agents (A1, A2, A3) receive raw information which is suited to evaluating fault incidents and/or to optimising reconfiguration decisions by the respective network element (RNCA, RNCB) by way of defined interfaces on the agent platform and
in which this raw information is processed within the respective agents (A1, A2, A3) and decision information which is suited to evaluating fault incidents and/or to optimising reconfiguration decisions is formed therefrom and this is made available to a network element (RNCA, RNCB) and/or a network operator and/or the agent provider (AP1, AP2 and AP3) and/or to a terminal manufacturer.

6. Method according to claim 5,
in which the network elements (RNCA, RNCB) transfer raw information relating to operational errors of the respective terminal to a respective agent (A1, A2, A3) of a terminal manufacturer by way of the defined interfaces of the agent platform and on request from the agent provider (AP1, AP2 and AP3) the agent (A1, A2, A3) provides decision information formed on the basis of this raw information to the agent provider (AP1, AP2 and AP3).

7. Network element (RNCA, RNCB) for implementing the method according to one of the preceding claims,
- having means for receiving agents (A1, A2, A3) and
- having means for receiving decision information which is suited to evaluating fault incidents and/or to optimising reconfiguration decisions.

8. Agent (A1, A2, A3) for mobile-radio networks for implementing the method according to one of claims 1 to 6,
- with at least one protected storage area,
- with means for receiving raw information which is suited to evaluating fault incidents and/or optimising reconfiguration decisions and
- with means for forming decision information which is suited to evaluating fault incidents and/or to optimising reconfiguration decisions from this raw information.

## Revendications

1. Procédé de détection d'erreurs dans le cas de terminaux reconfigurables et de support de décisions de reconfiguration
- qui sont externalisées par des éléments de réseau (RNCA, RNCB) sur au moins un agent (A1, A2, A3) protégé en accès de manière spécifique aux fabricants de terminaux, et
- dans lequel l'agent, sur la base d'informations brutes et de données spécifiques aux fabricants relatives au terminal respectif, données qui ne sont accessibles qu'à un fabricant de terminaux, à savoir le fabricant du terminal respectif, lesquelles informations et données sont mises à sa disposition, crée des informations de décision pour une reconfiguration d'un terminal et les met à la disposition d'un seul fabricant de terminaux autorisé.

2. Procédé selon la revendication 1, dans lequel les informations de décision contiennent des informations pour arrêter des fonctions erronées, pour initialiser la reconfiguration sur des modes par défaut qui fonctionnent parfaitement ou pour reconnaître la nécessité d'une mise à jour d'un logiciel.

3. Procédé selon la revendication 1, dans lequel les données spécifiques aux fabricants contiennent des élargissements d'un standard de téléphonie mobile concerné qui sont spécifiques aux fabricants.

4. Procédé selon la revendication 1, dans lequel les données spécifiques aux fabricants contiennent la consommation énergétique du terminal respectif dans des modes radio déterminés et/ou la durée de temps de la reconfiguration et/ou les caractéristiques exactes d'un transcepteur.

5. Procédé selon l'une des revendications 1 à 4, dans lequel des fournisseurs d'agents (AP1, AP2 et AP3) fournissent, directement ou par l'intermédiaire d'au moins un proxy agent (APX), des agents (A1, A2, A3) à des éléments de réseau (RNCA, RNCB) avec une plate-forme d'agents, dans lequel :
- les agents (A1, A2, A3) reçoivent de l'élément de réseau respectif (RNCA, RNCB), via des interfaces définies de la plate-forme d'agents, des informations brutes appropriées pour évaluer des cas d'erreurs et/ou appropriées pour optimiser des décisions de reconfiguration et
- ces informations brutes sont traitées au sein de l'agent respectif (A1, A2, A3) et, sur cette base, des informations de décision appropriées pour évaluer des cas d'erreurs et/ou pour optimiser des décisions de reconfiguration sont formées et celles-ci sont mises à la disposition d'un élément de réseau (RNCA, RNCB) resp. d'un exploitant de réseau et/ou d'un fournisseur d'agents (AP1, AP2 et AP3) resp. d'un fabricant de terminaux.

6. Procédé selon la revendication 5, dans lequel les éléments de réseau (RNCA, RNCB) transfèrent à un agent respectif (A1, A2, A3) d'un fabricant de terminaux, via les interfaces définies de la plate-forme d'agents, des informations brutes sur des erreurs d'exploitation du terminal respectif et l'agent (A1, A2, A3), à la demande du fournisseur d'agents (AP1, AP2 et AP3), fournit au fournisseur d'agents (AP1, AP2 et AP3) des informations de décision formées sur la base de ces informations brutes.

7. Élément de réseau (RNCA, RNCB) pour exécuter le procédé selon l'une des revendications précédentes, comportant :
- des moyens pour recevoir des agents (A1, A2, A3) et
- des moyens pour recevoir des informations de décision appropriées pour évaluer des cas d'erreurs et/ou appropriées pour optimiser des décisions de reconfiguration.

8. Agent (A1, A2, A3) pour des réseaux de téléphonie mobile permettant d'exécuter le procédé selon l'une des revendications 1 à 6, comportant :
- au moins une zone de mémoire protégée ;
- des moyens pour recevoir des informations brutes appropriées pour évaluer des cas d'erreurs et/ou appropriées pour optimiser des décisions de reconfiguration et
- des moyens pour former, à partir de ces informations brutes, des informations de décision appropriées pour évaluer des cas d'erreurs et/ou appropriées pour optimiser des décisions de reconfiguration.
